## Europäisches Patentamt
## European Patent Office
## Office européen des brevets

(11) Veröffentlichungsnummer: **0 198 940**

**B1**

(12) **EUROPÄISCHE PATENTSCHRIFT**

(45) Veröffentlichungstag der Patentschrift:
12.07.89

(21) Anmeldenummer: 85105049.2

(22) Anmeldetag: 25.04.85

(51) Int. Cl.⁴: **G 21 C 19/30**, C 01 B 4/00, B 01 D 59/50

(54) Verfahren zum Abtrennen und Anreichern von Tritium aus tritiierten Fluiden, insbesondere aus dem Kühlwasser des Primärkreislaufs und den Deuterium/Tritium-Strömen einer Kernfusionsanlage.

(43) Veröffentlichungstag der Anmeldung:
29.10.86 Patentblatt 86/44

(45) Bekanntmachung des Hinweises auf die Patenterteilung:
12.07.89 Patentblatt 89/28

(84) Benannte Vertragsstaaten:
BE CH DE FR GB IT LI NL SE

(56) Entgegenhaltungen:
DE-A-3 001 967
DE-B-2 300 185
FR-A-2 422 434

(73) Patentinhaber: GEBRÜDER SULZER AKTIENGESELLSCHAFT, Zürcherstrasse 9, CH-8401 Winterthur (CH)

(72) Erfinder: Stuecheli, Alexander, Dr., Juchstrasse 10, CH- 8400 Winterthur (CH)
Erfinder: Schaub, Martin, Sulzer Canada Inc. 60 Bloorstreet West Suite 700, Toronto Ontario M4W 3B8 (CA)

(74) Vertreter: Dipl.- Ing. H. Marsch Dipl.- Ing. K. Sparing Dipl.- Phys.Dr. W.H. Röhl Patentanwälte, Rethelstrasse 123, D-4000 Düsseldorf 1 (DE)

EP 0 198 940 B1

## Beschreibung

Die Erfindung betrifft ein Verfahren zum Abtrennen und Anreichern von Tritium aus tritiierten Fluiden, insbesondere aus dem Kühlwasser des Primärkreislaufes und den Deuterium/Tritium-Strömen einer Kernfusionsanlage.

Das Kühlwasser einer Kernfusionsanlage enthält unter anderm Tritium in der Form von HTO, das durch Neutronen im Brutmaterial gebildet wird. Aus radiotoxikologischen Gründen ist eine Entfernung des Tritiums aus dem Kühlwasser erforderlich.

Die folgenden Gasströme einer Kernfusionsanlage enthalten unter anderm ein Deuterium/Tritium-Gemisch: das Plasmaabgas, der Austritt aus der Neutralstrahlinjektion und der Blanketkreislauf, der erbrütetes Tritium aufnimmt.

Es ist bekannt, Tritium mittels Wasserrektifikation aus tritiiertem Wasser zu trennen. Es ist auch bekannt, das Tritium in einem kombinierten elektrolytischen/katalytischen Isotopen-Austauschverfahren anzureichern. Es ist ebenfalls bekannt, dass Tritium katalytisch aus der wässrigen Phase mit Wasserstoff (Protium oder Deuterium) ausgetauscht werden kann, wobei der Katalysator in Suspension, in überhitzter Dampfphase- oder, wenn hydrophob, in Flüssigphase-Umgebung die Austauschreaktion unterstützt. Schliesslich ist das Wasserstoff-Tieftemperatur-Rektifikationsverfahren zum Trennen von Wasserstoffisotopen $H_2$, HD, HT, $D_2$, DT und $T_2$ bekannt. Alle diese Verfahren haben ihre Vorteile, Nachteile und Grenzen der Durchführbarkeit und Wirtschaftlichkeit.

Der Erfindung liegt die Aufgabe zugrunde ein Verfahren der eingangs definierten Art zu schaffen, dass die Vorteile der bekannten Verfahren ausnutzt, deren Nachteile jedoch vermeidet.

Diese Aufgabe wird erfindungsgemäß durch die im Kennzeichen des Anspruchs 1 angegebenen Merkmale gelöst. Die Unteransprüche definieren vorteilhafte Weiterbildungen.

Gemäß der Erfindung wird das Tritium aus dem tritiierten Kühlwasser durch eine Kombination der genannten, an sich bekannten Verfahren getrennt. Dabei wird das Tritium in die Wasserstoffphase übergeführt und dann im Tieftemperatur-Rektifikationsverfahren weitergehend angereichert. Es fällt somit kein angereichertes tritiiertes Abwasser aus dem Kühlmittelkreis an und das im Kühlmittelkreislauf enthaltene Tritium wird zurückgewonnen. Dies ist wichtig im Zusammenhang mit der Empfehlung der International Commission on Radiation Protection (ICRP) aus radiotoxikologischen Gründen nicht über 100 Ci/l anzureichern und zu handhaben. Das Verfahren weist weiterhin den Vorteil auf, dass die Abreicherung an Tritium im Auftriebsteil des Tieftemperatur-Rektifikationsverfahren nicht vollständig zu sein braucht, weil diese auch im kombinierten elektrolytischen/katalytischen Isotopenanreicherungsverfahren stattfinden kann und das mit höherem Trennfaktor. Die Tritiumabreicherung läßt sich leicht über mehrere Größenordnungen bewerkstelligen, so daß das enttritierte Wasser an die Umgebung abgegeben werden kann. Wichtigster Vorteil des Verfahrens ist, dass das im Kühlmittelkreislauf enthaltene Tritium zurückgewonnen wird und keine tritiumbelasteten Abwässer entstehen.

Gemäß der Erfindung werden die Wasserstoffisotopenströme im Tieftemperatur-Rektifikationsverfahren kombiniert verarbeitet. Es erübrigt sich somit ein zweites separates Tieftemperaturkolonnen-Rektifikationssystem und das gesamte Tritiuminventar, hauptsächlich jeweils durch die letzte Tritiumanreicherungskolonne bedingt, reduziert sich.

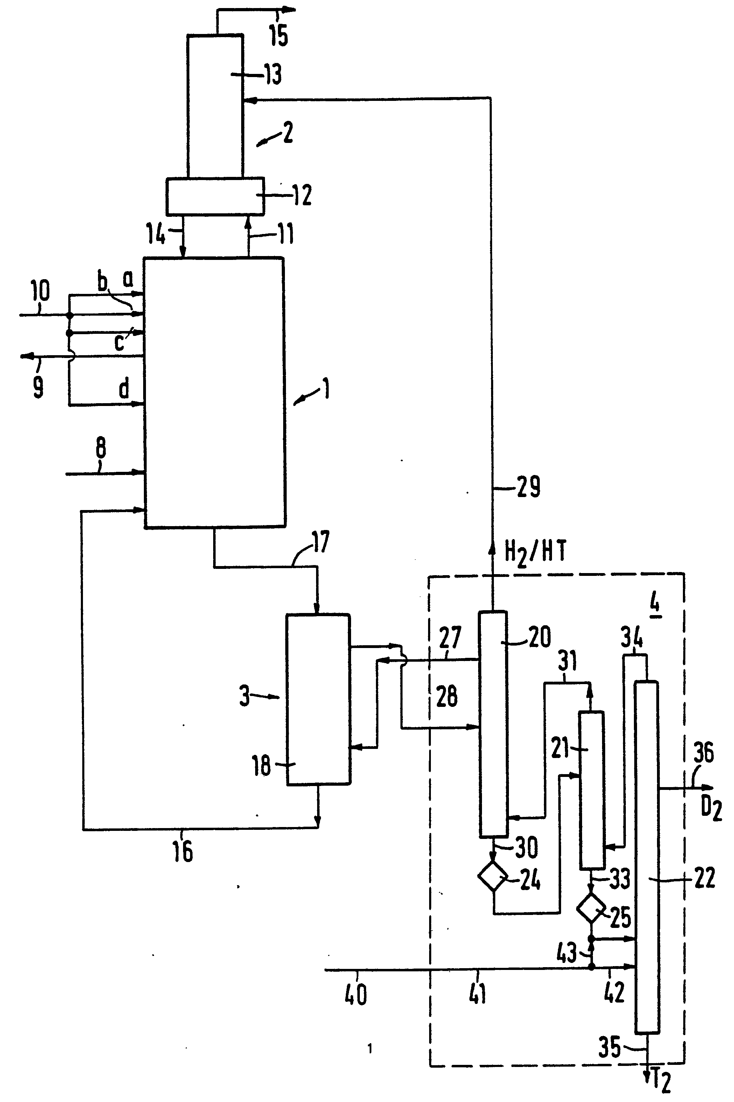

Ein Ausführungsbeispiel des Erfindungsgegenstandes ist nachfolgend anhand der Zeichnung, die ein Blockschema einer Anlage zum Durchführen des Verfahrens zeigt, beschrieben.

Die Anlage besteht aus vier Teilanlagen:

Eine Wasserrektifikationsanlage 1, einer Anlage 2 zum Durchführen des kombinierten elektrolytischen/katalytischen Isotopenanreicherungs-Verfahrens, einer Anlage 3 zum Durchführen des katalytischen Isotopenaustauschverfahrens und einer Tieftemperatur-Rektifikationsanlage 4. Bau und Arbeitsweise solcher Anlage sind bekannt und sind hier daher nur insofern beschrieben und ihre Wirkungsweise besprochen wie für das Verständnis des Verfahrens nötig.

Das aufzubereitende, Tritium in der Form von HTO enthaltende Kühlwasser eines (nichtgezeichneten) Fusionsreaktors, wird über einen Weg 8 in die Wasserrektifikationsanlage 1 eingeführt, in der es in ein an HTO abgereichertes Kopfprodukt und ein an HTO angereichertes Sumpfprodukt getrennt wird. Das an Tritium abgereicherte Kühlwasser kann über einen Weg 9 die Wasserrektifikationsanlage 1 seitlich verlassen und wieder in den Kühlkreislauf zurückgeführt werden.

Es sei hier bemerkt, dass nebst dem Kühlwasser in einer Kernfusionsanlage auch diverse wässrige tritiumhaltige Abfallströme anfallen und in der Wasserrektifikationsanlage 1 verarbeitet werden können. Die Abfallströme werden auf einen Weg 10 angeliefert und daraus an geeigneten konzentrationsäquivalenten Stellen a, b, c und d eingespeist.

Das abgereicherte Kopfprodukt strömt über einen Weg 11 zur Anlage 2 für den kombinierten elektrolytischen/katalytischen Isotopenaustausch und -anreicherung. Die Anlage besteht aus einem Elektrolyseur 12, einer Isotopenaustauschkolonne 13 und einem (nichtgezeichneten) $H_2/O_2$-Rekombinator, der den vom Elektrolyseur erzeugten Wasserstoff und Sauerstoff wieder zu Wasser vereinigt. Weiterhin sind (nichtgezeichnete) Befeuchtungs-, Entfeuchtungs- und Elektrolytabtrennungsvorrichtungen für die Wasserstoff-, Sauerstoff- und Wasserströme vorgesehen. Der Elektrolyseur 12 bildet aus dem Rektifikationskolonnen-Kopfprodukt 11 ein $H_2/HT$-Gemisch, das in die Austauschkolonne 13 eingeführt und dort im Gegenstrom zum aus dem Rekombinator in der Kolonne abwärtsströmenden Wasser aufsteigt. Wasser wird dabei an Tritium angereichert und strömt über einen Weg 14 in die Wasserrektifikationsanlage 1, wo es ebenfalls in ein an Tritium abgereichertes Kopfprodukt und an Tritium angereichertes Sumpfprodukt getrennt wird. In diesem Kreislauf wird das Wasser stark an Tritium abgereichert und es verlässt die Anlage über einen Weg 15 und strömt z. B. zum Kühlwasserkreislauf des Fusionsreaktors zurück oder darf, wegen des sehr tiefen Tritiumgeholtes aus der Kernfusionsanlage an die Umgebung abgegeben werden. Das in der Wasserrektifikationsanlage 1 am HTO angereicherte Sumpfwasser verlässt diese über einen Weg 17 und strömt in die Anlage 3 zum Durchführen eines katalysierten Isotopenaustausches. Die Anlage, die im der Hauptsache aus mindestens einer Isotopenaustauschstufe 18 besteht, arbeitet mit der Tieftemperatur-Rektifikationsanlage 4 zusammen. Das Sumpfwasser kann der Kolonne 18 in flüssiger - oder in Dampfform zugeführt werden.

Die Tieftemperatur-Rektifikationsanlage 4 besteht im wesentlichen aus mindestens drei Rektifikationskolonnen 20, 21 und 22. An geeigneten Stellen sind katalytische Gleichgewichtskonverter 24 und 25 vorgesehen, zwecks Überführen von 2HT in $H_2$ und $T_2$, wodurch die Tieftemperaturtrennung erleichtert wird; für eine ursprüngliche $H_2$/HT-Mischung ist jetzt $H_2$ von $T_2$ leichter destillativ trennbar.

Im internen Rektifikationskreislauf der ersten Kolonne 20 der Anlage 4 findet eine Trennung in $H_2$ und HT statt. Der gasförmige Wasserstoff wird über einen Weg 27 in die Austauschstufe 18 geleitet und dort mit tritiumhaltigem Wasser in Kontakt gebracht. Beim stattfindenden Isotopenaustausch geht ein Teil des Tritiums in den Wasserstoffstrom über, während ein Teil des Wasserstoffs von der wässrigen Phase aufgenommen wird. Der $H_2$/HT-Gasstrom wird über einen Weg 28 in die Kolonne 20 geleitet. Das an Tritium abgereicherte Wasser aus der Austauschkolonne 18 wird zur Wasserrektifikationsanlage 1 geführt, zwecks fortgesetzter Rektifikation.

Das aus einem $H_2$/HT-Gemisch bestehende Kopfprodukt der Kolonne 20 wird über einen Weg 29 in die Isotopenaustauschkolonne 13 der Anlage 2 für kombinierten elektrolytischen/katalytischen Isotopenaustausch geführt wo das in der Kolonne 20 nicht abgetrennte Tritium in die wässrige Phase übertritt. Durch diese Massnahme braucht die Tritiumabtrennung im Kopfprodukt 29 der Tieftemperatur-Rektifikation in der Kolonne 20 nicht vollständig zu sein, weil diese teilweise in der Anlage 2 erfolgt. Somit ist nur einmal eine fast vollständige Tritiumabreicherung auf eine Konzentration, die eine Abgabe an die Umgebung erlaubt, nötig.

Das aus HT bestehende Sumpfprodukt der Kolonne 20 wird über eine Leitung 30 und, falls eine Gleichgewichtseinstellung 2HT → $H_2$+$T_2$ vorteilhaft ist, einem Konverter 24 der Kolonne 21 zugeführt, dessen Kopfprodukt, $H_2$, über einen Weg 31 in den untern Teil der Kolonne 20 zurückgegeben wird. Das Sumpfprodukt, $H_2$/HT, der Kolonne 21 wird über einen Weg 33 und den Konverter 25 in die Kolonne 22 geleitet, in der die endgültige Trennung in ein Kopfprodukt $H_2$ und ein Sumpfprodukt Tritium $T_2$ stattfindet. Das Tritium wird über einen Weg 35 aus der Kolonne abgezogen.

Über Wege 40, 41, 42 und 43 können mit Tritium angereicherte Wasserstoffisotopenströme aus dem Brutmaterial (blanket), aus der Neutralstrahlinjektion, dem Plasmaabgas und andernorts an geeigneten, konzentrationsäquivalenten Stellen in die Kolonnen der Tieftemperatur-Rektifikationsanlage 4 zum Austrennen des enthaltenen Tritiums zugegeben werden. Über den Weg 40 kommt hauptsächlich ein $D_2$/DT/$T_2$-Gemisch, so dass die im Blockschema gezeichnete Rektifikationskolonne 22 zur Auftrennung dieses Gemisches in einen Deuteriumproduktstrom 36 und Tritiumproduktstrom 35 mindestens noch einen (nichtgezeichneten) Gleichgewichtskonverter 2DT → $D_2$+$T_2$ haben muß. Kolonne 22 kann aus mehr als einer Kolonne bestehen. Die Auftrennung in $D_2$ und $T_2$ hat den überraschenden Vorteil, dass die Regelung der Kolonnen 22 und die Analytik einfacher sind und nur ein Tritiumproduktstrom 35 entsteht.

Obschon das Verfahren für eine Kernfusionsanlage beschrieben worden ist, ist es nicht darauf beschränkt, sondern kann auch für die Tritiumabtrennung in einer Kernbrennstoff-Wiederaufarbeitungsanlage verwendet werden. Da in diesem Falle keine Deuterium/Tritiumströme anfallen, ist auch keine Auftrennung in einer Deuterium- und in einen Tritiumstrom erforderlich.

**Patentansprüche**

1. Verfahren zum Abtrennen und Anreichern von Tritium aus tritiierten Fluiden, insbesondere dem Kühlwasser des Primärkreislaufes und den Deuterium/Tritium-Strömen einer Kernfusionsanlage, gekennzeichnet durch die Kombination folgender Verfahrensschritte:

- das zu enttritiierende wässrige Fluid wird in einem Wasserrektifikationsverfahren in an Tritium abgereichertes wässriges Kopfprodukt und in ein an Tritium angereichertes wässriges Sumpfprodukt getrennt;
- das teilweise entritiierte wässrige Fluid, insbesondere das kühlweise entritiierte Kühlwasser des Primärkreislaufes, wird der Wasserrektifikation als Kopfprodukt entnommen;
- das wässrige, teilweise entritiierte Fluid wird in einem kombinierten elektrolytischen/katalytischen Isotopenaustauschverfahren an Tritium weiter abgereichert und als fast vollständig tritiumfreier Produktstrom an die Umgebung abgeführt oder in den Kühlkreislauf der Anlage zurückgeführt;
- das Tritium des angereicherten, wässrigen Sumpfprodukts wird in einem katalytischen Isotopenaustauscherverfahren auf einen Wasserstoffstrom aus einem Tieftemperatur-Rektifikationsverfahren übertragen und dieses wässrige Sumpfprodukt an Tritium abgereichert, wobei das im Tieftemperatur-Rektifikationsverfahren weiter aufgetrennte H₂/HT-Gemisch im Kreislauf zwischen beiden Verfahren geführt wird;

- das im Isotopenaustauschverfahren abgereicherte wässrige Fluid wird dem Wasserrektifikationsverfahren zur fortgesetzten Rektifikation zugeführt; und

- vom H₂/HT-Gemisch wird in der Tieftemperatur-Rektifikation das Tritium als T₂ abgetrennt.

2. Verfahren nach Anspruch 1, dadurch gekennzeichnet, dass ein Teil des im Tieftemperatur-Rektifikationsverfahren aufgetrennten Wasserstoff-Tritiumgemisches dem kombinierten elektrolytischen/katalytischem Isotopen-Austausch verfahren zugeführt wird.

3. Verfahren nach Anspruch 1 oder 2, dadurch gekennzeichnet, dass Deuterium/Tritium-Ströme an geeigneten Stellen in das Tieftemperaturverfahren eingeführt werden und zusammen mit dem tritiumreichen HT/T₂-Strom weiter aufgetrennt werden.

4. Verfahren nach einem der Ansprüche 1 bis 3, dadurch gekennzeichnet, dass das D₂/DT/T₂-Gemisch im Tieftemperatur-Rektifikationsver fahren in einen tritiumreichen Produktstrom und einen sehr deuteriumreichen Produktstrom aufgetrennt wird.

## Claims

1. A process for separating and enriching tritium from tritiated fluids, more particularly primary-circuit cooling water and the deuterium /tritium streams in a nuclear fusion plant, characterised by the combination of the following process steps:

- the aqueous fluid to be de-tritiated is separated in a water rectification process into tritium-depleted aqueous top product and a tritium-enriched aqueous bottom product;
- the partly de-tritiated aqueous fluid, more particularly the partly de-tritiated cooling water from the primary circuit, is drawn from the water rectification process as top product;
- the aqueous, partly de-tritiated fluid is further tritium-depleted in a combined electrolytic/catalytic isotope exchange process and discharged as an almost completely tritium-free product stream to the environment or returned to the cooling circuit of the plant;
- the tritium from the enriched aqueous bottom product is transferred in a catalytic isotope exchange process to a hydrogen stream from a low-temperature rectification process, and this aqueous bottom product is tritium-depleted, the H₂/HT mixture further separated in the low temperature rectification process being circulated between the two processes;
- the aqueous fluid depleted in the isotope exchange process is fed to the water rectification process for further rectification; and
- the tritium from the H₂/HT mixture is separated in the low temperature rectification process in the form of T₂.

2. A process as claimed in claim 1, characterised in that some of the hydrogen/tritium mixture separated in the low-temperature rectification process is fed to the combined electrolytic /catalytic isotope exchange process.

3. A process as claimed in claims 1 or 2, characterised in that deuterium/tritium streams are fed at suitable places into the low temperature process and are further separated together with the tritium-rich HT/T₂ stream.

4. A process as claimed in any of claims 1 to 3, characterised in that the D₂/DT/T₂ mixture is separated in the low-temperature rectification process into a tritium-rich product stream and a highly deuterium-rich product stream.

## Revendications

1. Procédé de traitement de fluides tritiés, notamment de l'eau de refroidissement du circuit primaire et des courants contenant du deutérium et du tritium d'une installation de fusion nucléaire, pour en séparer le tritium et pour le concentrer, caractérisé par la combinaison des phases opératoires suivantes:

- le fluide aqueux dont le tritium doit être séparé est divisé, dans une opération de rectification de l'eau, en un produit aqueux de tête appauvri en tritium et en un produit aqueux de queue enrichi en tritium;
- le fluide aqueux dont le tritium est partiellement enlevé, notamment l'eau de refroidissement du circuit primaire dont le tritium a été partiellement enlevé, est séparé comme produit de tête de la rectification de l'eau;
- le fluide aqueux partiellement débarrassé du tritium est encore appauvri en tritium dans un procédé combiné électrolytique/catalytique d'échange d'isotopes et est déchargé dans le milieu ambiant comme courant de produit presque entièrement débarrassé de tritium ou est recyclé dans le circuit de refroidissement de l'installation;
- le tritium du produit de queue aqueux enrichi est transféré, dans un procédé d'échange catalytique d'isotopes, à un courant d'hydrogène provenant d'un procédé de rectification à basse température et ce produit de queue aqueux est appauvri en tritium, le mélange H₂/HT davantage divisé dans le procédé de rectification à basse température étant mis en circulation entre les deux procédés;
- le fluide aqueux appauvri dans le procédé d'échange d'isotopes est amené au procédé de rectification d'eau en vue de la poursuite de la rectification; et

- le tritium est séparé sous forme de $T_2$ du mélange $H_2$/HT dans la rectification à basse température.

2. Procédé suivant la revendication 1, caractérisé en ce qu'une partie du mélange hydrogène-tritium séparé dans le procédé de rectification à basse température est amenée au procédé électrolytique/catalytique combiné d'échange d'isotopes.

3. Procédé suivant la revendication 1 ou 2, caractérisé en ce que des courants de deutérium/tritium sont introduits en des endroits appropriés dans le procédé à basse température et leur division est poursuivie conjointement avec le courant HT/$T_2$ riche en tritium.

4. Procédé suivant l'une des revendications 1 à 3, caractérisé en ce que le mélange $D_2$/DT/$T_2$ est divisé dans le procédé de rectification à basse température en un courant de produit riche en tritium et un courant de produit très riche en deutérium.

EP 0 198 940 B1